# DEMANDE DE BREVET EUROPEEN

(11) **EP 1 430 939 A1**
(43) Date de publication de la demande: **23.06.2004**
(21) Numéro de dépôt: 03293086.9
(22) Date de dépôt: 09.12.2003
(51) Int. Cl.: B01D 17/025, B01D 21/02, E03F 5/16, E04H 7/04, B01D 17/00

(54) **Séparateur à graisses et à liquides légers à boîtier empilable ainsi que boîtier destiné à un tel séparateur**

(30) Priorité: 16.12.2002 FR 0215897
(71) Demandeur: FRANCEAUX S.A., 78508 Sartrouville Cédex (FR)
(72) Inventeur: Delarroqua, Jacques, 77270 Villeparisis (FR)
(74) Mandataire: Cabinet HERRBURGER

(57) **Abrégé**

Séparateur à graisses et à liquides légers, notamment à hydrocarbures constitué par un boîtier métallique muni d'un conduit d'admission du flux à traiter, d'un conduit d'évacuation du flux épuré et subdivisé de préférence à sa partie interne en deux compartiments séparés par une cloison, à savoir un compartiment de débourbage et un compartiment de séparation des graisses et des liquides légers, notamment des hydrocarbures, ce boîtier métallique étant équipé à sa partie supérieure d'une couverture métallique munie d'au moins une amorce de cheminée ou d'au moins un cadre cornière assemblé sur celui-ci de façon à permettre l'accès à sa partie interne.

Le boîtier est en forme de tronc de pyramide, de préférence à base rectangulaire de façon à permettre l'empilement de plusieurs boîtiers identiques préalablement à l'assemblage des différents éléments constitutif du séparateur.

## Description

La présente invention concerne un séparateur à graisses et à liquides légers notamment à hydrocarbures à usage domestique ou industriel.

Les eaux de ruissellement renferment classiquement une quantité notable d'hydrocarbures, de boues et de diverses matières solides en suspension qu'il est nécessaire d'éliminer avant toute réutilisation.

Par suite, les particuliers ou les petites communautés locales ou artisanales souhaitent disposer de dispositifs permettant une séparation simple et peu onéreuse de ces différents éléments de l'eau qui correspond à l'élément porteur.

Pour satisfaire à cette demande, les spécialistes proposent sur le marché des séparateurs constitués par un boîtier de forme parallélépipédique muni d'un conduit d'admission du flux à traiter et d'un conduit d'évacuation du flux épuré ; un tel boîtier parallélépipédique est de préférence subdivisé à sa partie interne en deux compartiments séparés par une cloison, à savoir un compartiment de débourbage et un compartiment de séparation des graisses et des liquides légers, notamment des hydrocarbures.

Des séparateurs de ce type sont à titre d'exemple décrits dans le document FR-2 689 535 ou dans la demande de brevet non publiée FR-02 02 276.

Il est indispensable que le personnel d'entretien puisse avoir accès à la partie interne du boîtier comprenant le compartiment débourbeur et le compartiment séparateur.

A cet effet, celui-ci est en règle générale équipé, à sa partie supérieure soit d'une couverture munie d'au moins une amorce de cheminée soit d'au moins un cadre cornière permettant la mise en place d'un tampon d'obturation amovible.

Le boîtier des séparateurs à graisses et à liquides légers actuellement proposés dans le commerce est souvent réalisé en métal, auquel cas la couverture ou le cadre cornière associé est lui aussi constitué par un élément métallique.

Pendant longtemps, les couvertures métalliques ou les cadres cornières ont été assemblés au boîtier par des cordons de soudure continus ou discontinus, ce qui n'était pas sans présenter un certain nombre d'inconvénients.

En effet, pour éviter tout risque de corrosion, il est impératif d'appliquer un revêtement de protection sur la totalité de la surface intérieure des séparateurs métalliques, y compris les couvertures, les amorces de cheminées et les cadres cornières.

Or, la soudure des couvertures métalliques ou des cadres cornières sur les boîtiers doit obligatoirement être réalisée avant la peinture de ces éléments.

Par suite, cette dernière opération qui doit être effectuée sur le séparateur assemblé est longue et incommode, donc coûteuse en main d'oeuvre.

De plus, il est impossible de garantir une parfaite application de la peinture protectrice sur toutes les surfaces en particulier à l'intérieur du boîtier et sur les cadres cornières et les amorces de cheminées qui sont difficilement accessibles ; il peut donc subsister des zones non recouvertes de peinture qui peuvent être le siège d'amorces de corrosion.

Pour remédier à ces inconvénients, il a été proposé selon la demande de brevet non publiée FR-02 12 774 de remplacer les cordons de soudure continus ou discontinus par des moyens d'assemblage autres de façon à permettre de peindre les différents éléments constitutifs d'un séparateur (boîtier, couverture, amorce de cheminée, cadre cornière, ...) avant leur assemblage.

Dans ce contexte, il serait économiquement avantageux de pouvoir centraliser la fabrication des différents éléments constitutifs des séparateurs à graisses et à liquides légers, en particulier de leur boîtier avant de les transporter vers des centres de montage répartis sur le territoire et situés à proximité des utilisateurs finals.

La mise en place d'un tel système est toutefois freinée dans la pratique par le caractère encombrant des boîtiers parallélépipédiques classiques qui entraîne des frais de stockage et de transport très importants vu que ces frais sont proportionnels au volume.

Conformément à l'invention, on a eu l'idée de remédier à cet inconvénient en proposant des séparateurs à graisses et à liquides légers, notamment à hydrocarbures, à boîtiers empilables.

Un tel séparateur à graisses et à liquides légers, notamment à hydrocarbures est constitué par un boîtier métallique muni d'un conduit d'admission du flux à traiter, d'un conduit d'évacuation du flux épuré, et subdivisé de préférence à sa partie interne en deux compartiments séparés par une cloison, à savoir un compartiment de débourbage et un compartiment de séparation des graisses et des liquides légers, notamment des hydrocarbures.

Ce boîtier métallique est équipé à sa partie supérieure d'une couverture métallique muni d'au moins une amorce de cheminée ou d'au moins un cadre cornière assemblé sur celui-ci de façon à permettre l'accès à sa partie interne.

Selon l'invention, un tel séparateur à graisses et à liquides légers, notamment à hydrocarbures est caractérisé en ce que le boîtier est en forme de tronc de pyramide, de préférence à base rectangulaire.

Cette géométrie particulière du boîtier permet d'emboîter des boîtiers identiques les uns dans les autres avant ou après peinture de ces boîtiers de façon à obtenir des piles de boîtiers pouvant être stockées dans un local quelconque après fabrication dans un atelier centralisé puis transportées vers un centre de montage au niveau duquel on effectue l'assemblage des différents éléments constitutifs des séparateurs.

La hauteur des piles ainsi obtenues n'est limitée que par la hauteur disponible dans les locaux de stockage ou les wagons ou camions assurant leur transport, ce qui permet de réaliser des économies appréciables tant au niveau du stockage que du transport.

Selon l'invention, il est souhaitable que le boîtier ait une contenance maximum, donc que sa forme se rapproche le plus possible de celle d'un parallélépipède, tout en permettant bien entendu l'emboîtement de plusieurs boîtiers les uns dans les autres ; à cet effet, le boîtier comporte en règle générale, une face supérieure ouverte un fond ainsi que quatre parois latérales dont les faces internes définissent un angle compris entre 91 et 98° avec le fond.

Ainsi, le boîtier ne s'« évase » que faiblement de son fond vers sa face supérieure ouverte, de sorte que son volume interne soit en fait très proche de celui d'un boîtier parallélépipédique dans lequel le fond et la face supérieure auraient des surfaces identiques.

Selon une caractéristique préférentielle de l'invention les faces externes des parois latérales du boîtier sont équipées d'anneaux de manutention soudés à leur partie supérieure.

La présence de ces anneaux de manutention est quasiment indispensable pour permettre de manipuler les boîtiers de façon à pouvoir les empiler ou les extraire individuellement des piles.

Ces anneaux de manutention permettent en outre d'éviter tout coincement des boîtiers les uns dans les autres au sein des piles en les maintenant constamment à une distance suffisante.

L'invention se rapporte également à un boîtier métallique destiné à un séparateur à graisses et à liquides légers, notamment à hydrocarbures du type susmentionné.

Un tel boîtier est caractérisé en ce qu'il est en forme de tronc de pyramide à base rectangulaire et comporte une face supérieure ouverte un fond ainsi que quatre parois latérales dont les faces internes définissent un angle compris entre 91 et 98° avec le fond.

Les faces externes des parois latérales de ce boîtier sont de préférence équipées d'anneaux de manutention soudés à leur partie supérieure.

## Revendications

1. Séparateur à graisses et à liquides légers, notamment à hydrocarbures constitué par un boîtier métallique muni d'un conduit d'admission du flux à traiter, d'un conduit d'évacuation du flux épuré et subdivisé de préférence à sa partie interne en deux compartiments séparés par une cloison, à savoir un compartiment de débourbage et un compartiment de séparation des graisses et des liquides légers, notamment des hydrocarbures, ce boîtier métallique étant équipé à sa partie supérieure d'une couverture métallique munie d'au moins une amorce de cheminée ou d'au moins un cadre cornière assemblé sur celui-ci de façon à permettre l'accès à sa partie interne,
**caractérisé en ce que**
le boîtier est en forme de tronc de pyramide, de préférence à base rectangulaire de façon à permettre l'empilement de plusieurs boîtiers identiques préalablement à l'assemblage des différents éléments constitutif du séparateur.

2. Séparateur selon la revendication 1,
**caractérisé en ce que**
le boîtier comporte une face supérieure ouverte un fond ainsi que quatre parois latérales dont les faces internes définissent un angle compris entre 91 et 98° avec le fond.

3. Séparateur selon l'une quelconque des revendications 1 et 2,
**caractérisé en ce que**
les faces externes des parois latérales du boîtier sont équipées d'anneaux de manutention soudés à leur partie supérieure.

4. Boîtier métallique destiné à un séparateur à graisses et à liquides légers, notamment à hydrocarbures selon l'une quelconque des revendications 1 à 3,
**caractérisé en ce qu'**
il est en forme de tronc de pyramide à base rectangulaire et comporte une face supérieure ouverte, un fond ainsi que quatre parois latérales dont les faces internes définissent un angle compris entre 91 et 98° avec le fond.

5. Boîtier métallique selon la revendication 4,
**caractérisé en ce que**
les faces externes des parois latérales sont équipées d'anneaux de manutention soudés à leur partie supérieure.
